# EUROPÄISCHE PATENTANMELDUNG

(11) **EP 0 917 996 A2**
(43) Veröffentlichungstag der Anmeldung: **26.05.1999**
(21) Anmeldenummer: 98890324.1
(22) Anmeldetag: 04.11.1998
(51) Int. Cl.: B60R 21/26

(54) **Airbagvorrichtung für ein Fahrzeug**

(30) Priorität: 19.11.1997 AT 1960/97; 02.09.1998 AT 1491/98
(71) Anmelder: HYGRAMA AG, CH-6343 Rotkreuz (CH)
(72) Erfinder: Frisch, Herbert, Ing., 86972 Altenstadt (DE); Wirtl, Johannes, 86956 Schongau (DE); Vollmer, Josef, Dr., 86975 Bernbeuren (DE)
(74) Vertreter: Pinter, Rudolf, Dipl.-Ing.

(57) **Zusammenfassung**

Eine Airbagvorrichtung umfaßt einen Gasgenerator, ein dadurch aufblasbares Gaskissen und eine mit dem Gasgenerator zu dessen Auslösung verbundenen ersten Sensoreinrichtung, wobei zwischen dem Gasgenerator und dem aufblasbaren Gaskissen eine Regeleinrichtung (1) für den Gasvolumenstrom eingebaut ist, welche mit einer zweiten Sensoreinrichtung zur Feststellung von Hindernissen im vorbestimmten Ausbreitungsbereich des Gaskissens in Verbindung steht, welche zur Abgabe dem Hindernis entsprechenden Stellsignalen ausgebildet ist. Um nicht verschiedene Treibsätze bzw. Gasgeneratoren und eine aufwendige Erkennungssensorik sowie Stellmechanismen verwenden zu müssen und trotzdem bei möglichst einfacher und funktionssicherer baulicher Ausführung ein Höchstmaß an Schutz für die Benutzer des Fahrzeugs zu bieten, gleich in welcher Stellung sie sich im Moment der Auslösung des Airbags befinden, ist die Regeleinrichtung (1, 15, 40) zur Einstellung von zumindest zwei diskreten, unterschiedlichen Durchlaßquerschnitten ausgelegt und dazu beispielsweise mit zwei aufgrund der Sensoreinrichtung vorzugsweise pyrotechnisch auslösbaren, normal auf die Achse der Durchströmöffnung (2) für das Gas bewegbaren Elementen (5, 6, 16, 17, 31, 32, 42, 43, 53, 54, 66, 67, 73, 74) ausgestattet.

## Beschreibung

Die Erfindung betrifft eine Airbagvorrichtung für ein Fahrzeug, mit zumindest je einem Gasgenerator, einem durch diesen Gasgenerator aufblasbaren Gaskissen und einer mit dem Gasgenerator zu dessen Auslösung verbundenen ersten Sensoreinrichtung, wobei zwischen dem oder jedem Gasgenerator und dem oder jedem davon aufblasbaren Gaskissen eine Regeleinrichtung für den Gasvolumenstrom eingebaut ist, welche mit einer zweiten Sensoreinrichtung zur Feststellung von Hindernissen im vorbestimmten Ausbreitungsbereich des Gaskissens in Verbindung steht, welche Sensoreinrichtung zur Abgabe dem Hindernis entsprechenden Stellsignalen an die Regeleinrichtung ausgebildet ist, sowie ein Verfahren zum Betreiben einer Airbagvorrichtung für Fahrzeuge.

Airbagvorrichtungen in Fahrzeugen, insbesondere in Personenkraftfahrzeugen, sind sehr wirksam bezüglich des Schutzes von in der normalen Position auf dem jeweiligen Sitz im Fahrzeug befindlichen Personen. Dabei wird auch besonderes Augenmerk auf den zeitlichen Verlauf der Ausbreitung des Gaskissens gelegt, um optimalen Schutz zu bieten. Beispielsweise kann ein zuerst langsames Entfalten und anschließend schnellstmögliches Aufblasen zur vollen Größe, allerdings mit unveränderlichem und nicht beeinflußbarem Verlauf, durch eine als Zündverzögerer zwischen einem zentralen Anzünder und der Brennkammer zur Gaserzeugung wirkende Verbindungsleitung erzielt werden, wie dies in der DE-OS 40 19 877 geoffenbart ist. Ein besonders wirksamer Schutz ist gegeben, wenn, beispielsweise zur Anpassung an den Unfallverlauf, das Aufblasen des Airbags gesteuert wird. So ist etwa in der US-Patentschrift 5,320,382 ein System beschrieben, bei dem mehrere separate Druckquellen mit immer größeren Gasvolumina vorhanden sind und bei Bedarf nacheinander in den Airbag abgeleitet werden können. Die Anzahl der betätigten Druckquellen wird über einen Beschleunigungssensor gesteuert. Auch bei der DE-OS 40 41 049 steuert ein Beschleunigungssensor zumindest ein Ventil, vorzugsweise je ein Ventil in mehreren Öffnungen vom Gasbehälter zum Airbag, um den Airbag im Anpassung an den Unfallverlauf beispielsweise in Stufen aufblasen zu können. Dagegen kann es aber gerade durch den Airbag zu Verletzungen kommen, die ohne diesen nicht passiert wären, wenn der Airbag ausgelöst wird, während sich die zu schützende Person in einer sogenannten "Out-off"-Position befindet, d.h. in einer von der normalen Position, für die der Airbag ausgelegt ist, abweichenden Stellung. Selbst beim System der US-Patentschrift 5,366,242, bei der das Aufblasen des Gaskissens in Abhängigkeit von Umgebungstemperatur, Gewicht der Autoinsassen und Längsposition der Sitze gesteuert wird, ist keine Berücksichtigung einer "Out-off"-Position vorgesehen und ist die Vorrichtung auch nicht zur raschen Anpassung des Aufblasens des Gaskissens an diese von der normalen Position der Fahrzeuginsassen abweichenden Position geeignet. Auch bei gegen die Fahrtrichtung auf dem Beifahrersitz montierten Kindersitzen kann oft die vom ausgelösten Airbag ausgeübte Kraft zu groß sein und das mitfahrende Kind verletzen. Daher sind Systeme geschaffen worden, bei welchen ein Sensorsystem die jeweilige Position der zu schützenden Person oder die Größe von Kindersitzen od. dgl. erkennt und davon abhängig verschiedene Treibsätze zündet, die so angelegt sind, daß die Schutzwirkung des Airbags noch vorhanden ist, aber kein zusätzlicher Personenschaden durch die extrem hohe Ausbreitungsgeschwindigkeit des Airbags entsteht. Diese Lösungsansätze habe aber den Nachteil, daß dafür verschiedene Treibsätze bzw. Gasgeneratoren, ähnlich der US-Patentschrift 5,320,382, und eine aufwendige Erkennungssensorik vorgesehen sein müssen und daß die Einstellvorrichtungen relativ langsam reagieren.

Die Aufgabe der vorliegenden Erfindung war es daher, eine Airbagvorrichtung zu schaffen, die unter Vermeidung der Nachteile des Standes der Technik bei möglichst einfacher und funktionssicherer baulicher Ausführung ein Höchstmaß an Schutz für die Benutzer des Fahrzeugs bietet, gleich in welcher Stellung sie sich im Moment der Auslösung des Airbags befinden, insbesondere indem möglichst rasch eine Einstellung des Aufblasvorganges des Airbags auf die in dessen Ausbreitungsbereich befindlichen Gegenstände bezüglich Lage und/oder Größe, Gewicht, Beschaffenheit od. dgl. erfolgt.

Diese Aufgabe wird erfindungsgemäß dadurch gelöst, daß die Regeleinrichtung zur Einstellung von zumindest zwei diskreten, unterschiedlichen Durchlaßquerschnitten ausgelegt ist. Durch diese Ausführung des Systems kann die Sensorik stark vereinfacht werden und es ist zum sicheren und für die Personen verletzungsgeschützten Funktionieren auch nur mehr ein Gasgenerator notwendig. Wenn ein Hindernis im Ausbreitungsbereich des Airbags festgestellt wird, beispielsweise eine sich in einer "Out-off"-Position befindliche Person, wird dies vor oder während der Ausbreitung des Gaskissens ermittelt und die Ausbreitungsgeschwindigkeit und/oder die Ausbreitungsdimension durch Abregelung in schnell einstellbaren diskreten Abstufungen berücksichtigt, wobei der Aufwand und Zeitverbrauch für die Einstellung weitestgehend minimiert ist, da nur diskrete Zustände mit vordefinierter Auswirkung auf den Gasvolumenstrom eingenommen werden können. Sicher ist aber eine umso feinere Abstufung der Ausbreitungsgeschwindigkeit des Gaskissens möglich, umso mehr unterschiedliche Durchlaßquerschnitte realisierbar sind, wobei aber mit dieser Anzahl auch die Komplexität, Baugröße und das Gewicht der Regeleinrichtung steigt, sodaß ein vernünftiger Kompromiß zwischen Anzahl der Regelstufen und der Baugröße bzw. Funktionssicherheit eingegangen werden sollte.

Gemäß einem weiteren Erfindungsmerkmal weist die Regeleinrichtung zumindest ein den freien Durchlaßquerschnitt zumindest einer Durchströmöffnung veränderndes, bewegbares Element auf, wodurch eine sehr kleine Dimensionierung der Regeleinrichtung, die somit platzsparend und leicht sein kann, möglich wird.

Um eine möglichst rasche und funktionssichere Auslösung der Querschnittsveränderung zu gewährleisten ist gemäß einem weiteren Merkmal der Erfindung vorgesehen, daß zumindest die Bewegung des Elementes zur Querschnittsverkleinerung der Durchströmöffnung der Regeleinrichtung durch pyrotechnische Auslösung erfolgt, vorzugsweise auch die Bewegung des Elementes zur Querschnittsvergrößerung der Durchströmöffnung der Regeleinrichtung durch pyrotechnische Auslösung erfolgt.

In baulich sehr einfacher und damit auch kostengünstiger Weise ist das Element als normal auf die Achse der Durchströmöffnung bewegbarer, im wesentlichen ebener Schieber ausgeführt. Dabei müssen lediglich einfach herstellbare Platten in ebenfalls sehr einfach herauszuarbeitenden, vorzugsweise geraden Führungen verschiebbar gehalten werden, um bei bzw. nach der Verschiebung die gewünschte Querschnittsverengung und damit die Anpassung des Gasvolumenstroms zu erhalten.

Gemäß einer ersten alternativen Ausführungsform ist dabei vorgesehen, daß das Element als um eine Achse verschwenkbare, im wesentlichen ebene Platte ausgeführt ist, wobei die Achse in einem Randbereich der Platte vorgesehen, normal auf die Platte und parallel zur Achse der Durchströmöffnung orientiert ist. Diese Ausführungsform gestattet durch entsprechende Formgebung des in den freien Querschnitt eingeschwenkten Randbereiches des Elementes einen sanfteren - bei konvexer Randgestaltung - oder abrupten - bei konkavem Rand - Querschnittsübergang und eine entsprechende Regelcharakteristik.

Gemäß einer weiteren erfindungsgemäßen Ausführungsform ist vorgesehen, daß das Element als um eine Achse verschwenkbare, im wesentlichen ebene Platte ausgeführt ist, wobei die Achse normal auf die Achse der Durchströmöffnung orientiert ist, durch einen Randbereich parallel zur Platte verläuft und vorzugsweise außerhalb der maximalen freien Durchströmöffnung angeordnet ist. Wenn dabei vorzugsweise die Platte in der Offenstellung der Strömungsrichtung des Gases entgegenragt, wird der Schließvorgang durch den Gasvolumenstrom noch unterstützt und beschleunigt und die Platte während des Aufblasens des Gaskissens durch den Gasstrom selbst sicher in der zweiten, einen Teil der Durchströmöffnung abdeckenden Endstellung gehalten. Für das Öffen des Elementes zum Freigeben der kompletten Durchströmöffnung ist dabei allerdings eine größere Kraft erforderlich als bei den zuvor beschriebenen Ausführungsformen.

Die Aufgabenstellung der Verkleinerung und Vereinfachung der Airbagvorrichtung kann für eine Ausführungsform, bei der das Element als um eine Achse verschwenkbare, im wesentlichen ebene Platte ausgeführt ist, diese Achse normal auf die Achse der Durchströmöffnung orientiert ist, durch einen Randbereich parallel zur Platte verläuft und vorzugsweise außerhalb der maximalen freien Durchströmöffnung angeordnet ist, auch dadurch gelöst werden, daß die Platte direkt am den Gaserzeuger umgebenden Gehäuse angebracht ist. Damit sind zusätzliche Gehäuse für die Beherbergung der Klappen vermieden und die Vorrichtung kann kleiner und leichter gebaut sein.

Vorteilhafterweise ist dabei die den Querschnitt verengende Endstellung der Platte durch ein direkt am Gehäuse befestigtes Fängerelement definiert, welches vorzugsweise zur Aufpralldämpfung verformbar ausgeführt ist. Das Fängerelement nimmt die Stoßenergie auf und gewährleistet dadurch, daß das Gehäuse um den Gaserzeuger und die Klappe selbst nicht beschädigt wird und die Funktion der Abregelung des Gasstromes sicher erhalten bleibt.

Gemäß einer wieder anderen Ausführungsform ist das Element als um eine Achse verschwenkbare, im wesentlichen ebene Platte ausgeführt, wobei die Achse normal auf die Achse der Durchströmöffnung orientiert ist, durch einen im wesentlichen mittigen Bereich parallel zur Platte verläuft und vorzugsweise durch den Durchströmquerschnitt verläuft. Diese Ausführungsform in Art von Jalousie-Elementen bietet einen - je nach genauer Position der Drehachse - ausgewogenen Kraftaufwand für das Verengen bzw. das Freigeben des Durchströmquerschnitts.

Eine weitere bauliche Vereinfachung und Verkleinerung des Systems bei uneingeschränkter Funktion wird gemäß einem weiteren Erfindungsmerkmal dadurch erzielt, daß das bewegbare Element als den Gaserzeuger in einer Endstellung zumindest teilweise abdeckende Blende ausgeführt ist, wodurch der zusätzliche Platzbedarf für das den Gasstrom zum Airbag regelnde Element minimiert ist.

Eine bevorzugte Ausführungsform ist für einen, eine bevorzugte Achse aufweisenden, vorzugsweise axialsymmetrischen Gaserzeuger, dadurch gekennzeichnet, daß die Blende entlang der bevorzugten Achse, vorzugsweise der Symmetrieachse, des Gaserzeugers bewegbar ist. Damit ist eine Konstruktionsart gegeben, bei der die Blende den Gaserzeuger sehr eng umschließen kann und lediglich in axialer Richtung etwas Platz für die Blende in ihrer ersten Endstellung, die den vollen Gasaustrittsquerschnitt freigibt, vorhanden sein muß. Die zur Verwendung mit den Ausführungsformen der vorliegenden Erfindung vorgesehenen bzw. optimal geeigneten Gaserzeuger sind von im wesentlichen zylindrischer Form und weisen mehrere Gasaustrittsöffnungen im Bereich des Zylindermantels auf. Die Blende deckt in ihrer zweiten Endstellung zur Abregelung des Gasstromes in den Airbag einige dieser Gasaustrittsöffnungen ab, sobald sie im Bedarfsfall - wenn ein Objekt im Ausbreitungsbereich des Airbags festgestellt wurde - über den Gaserzeuger geschoben wird.

Vorteilhafterweise sind zwei Blenden auf einander entgegengesetzten Seiten des Gaserzeugers vorgesehen, wodurch mehrere Querschnittseinstellungen und damit eine größere Flexibilität der Regelung ermöglicht sind.

Eine weitere vorteilhafte Ausführungsform für Airbagvorrichtungen mit einem eine bevorzugte Achse aufweisenden, vorzugsweise axialsymmetrischen Gaserzeuger, sieht vor, daß die Blende um die bevorzugte Achse, vorzugsweise die Symmetrieachse, des Gaserzeugers verschwenkbar ist.

Um eine Druckentlastung des Gaserzeugers trotz abgeregelten Querschnittes zum Airbag zu ermöglichen und so unzulässigen Überdruck im System zu vermeiden, weist die Blende vorzugsweise axial orientierte Bypasskanäle für das aus dem Gaserzeuger austretende Gas auf. Diese Bypasskanäle leiten den überschüssigen Gasstrom seitlich an der Durchtrittsöffnung zum Airbag vorbei, allenfalls durch eine Entspannungsöffnung ins Freie, oder sorgen durch die Umleitung zumindest eine Verzögerung des Gaseintritts in den Airbag, so daß ein wesentlich verzögertes Aufblasen zur vollen Größe erfolgt.

Vorteilhafterweise ist auch bei der letzteren Ausführungsform vorgesehen, daß zwei Blenden auf einander entgegengesetzten Seiten des Gaserzeugers vorgesehen sind. Dadurch ist wieder eine größere Freiheit in der Abstimmung der möglich Durchlaßquerschnitte bei sehr geringem Platzbedarf gegeben.

Um eine einfache Regelvorrichtung zu schaffen, mit der dennoch rasch Veränderungen des Durchströmquerschnitts in großem Ausmaß durchgeführt werden können, ist vorgesehen, daß zumindest zwei Elemente vorhanden sind, die in zumindest einer Stellung, vorzugsweise einer Endstellung, vorzugsweise unterschiedliche Querschnittsflächenanteile des Durchströmquerschnitts abdecken. Mit zwei Elementen sind zumindest drei unterschiedliche Querschnittsflächen einstellbar, wenn die beiden Elemente unterschiedliche Flächen abdecken - durch unterschiedlich weites Einschwenken oder Einschieben, durch unterschiedliche Formgebung oder Fläche, etc. - sind sogar vier verschiedene Abstufungen möglich. Dabei ist die maximale Einstellzeit durch nur das langsamere bzw. weiter zu bewegende Elemente gegeben, da das andere Element im Bedarfsfall ja gleichzeitig betätigt und zumindest gleich schnell in den Durchströmquerschnitt gebracht werden kann.

Eine in der Praxis als vorteilhaft ermittelte Abstufung wird erzielt, wenn zwei Elemente vorgesehen sind, von welchen eines zwischen 5% und 25% der freien Querschnittsfläche, vorzugsweise 15%, und das zweite zwischen 15% und 45% der freien Querschnittsfläche, vorzugsweise 30%, abdeckt. Damit ist sehr rasch und sicher eine Einstellung des Gasvolumenstroms in vier Abstufungen zu erzielen, die bis zu 70% des freien Durchströmquerschnitts reicht, wobei vorzugsweise 15%-Schritte vorgesehen sind und vier Stufen mit 100%, 85%, 70% und 65% Öffnungsquerschnitt vorgesehen sind.

Damit bei teilweise abgedecktem Durchströmquerschnitt kein unzulässiger Überdruck im System entsteht, ist vorteilhafterweise gemäß einem weiteren Erfindungsmerkmal vorgesehen, daß die Regeleinrichtung zumindest eine Ablaßöffnung für zumindest einen Teil des vom Gasgenerator kommenden Gasvolumenstroms aufweist.

Um bei freier Ausbreitungsmöglichkeit des Airbags dessen Wirkung völlig unbehindert zu lassen, ist die Ablaßöffnung in Abhängigkeit von der Stellung des den freien Durchlaßquerschnitt zumindest einer Durchströmöffnung verändernden, bewegbaren Elementes und/oder der zweiten Sensoreinrichtung zur Feststellung von Hindernissen im vorbestimmten Ausbreitungsbereich des Gaskissens öffenbar. Wenn die Durchströmöffnung also nicht verkleinert wird, bleibt auch die Ablaßöffnung geschlossen, es kann auch kein Gas ins Äußere gelangen und der Airbag wird mit der gesamten Gasmenge aufgefüllt.

Um sich den Aufwand für das Öffnen der Ablaßöffnung im Ernstfall zu ersparen und somit die Regeleinrichtung einfacher, kleiner und funktionssicherer auszuführen, ist vorteilhafterweise die Ablaßöffnung immer durchlässig und schließt deren Achse mit der Achse der Durchlaßöffnung einen vorzugsweise stumpfen Winkel ein, ist insbesondere normal darauf orientiert. Bei nicht verkleinerter Durchströmöffnung strömt die weitaus größte Menge an Gas an der Ablaßöffnung vorbei - umso besser, je mehr sich der die Achse der Ablaßöffnung von der Richtung der Gasströmung unterscheidet - und nur im Fall eines Druckaufbaus durch Abdecken zumindest eines Teils des Durchströmquerschnittes führt dieser erhöhte Druck zu einem Ausströmen eines Teils des Gases durch die Ablaßöffnung.

Die eingangs gestellte Aufgabe wird weiters bei einem Verfahren zum Betreiben einer Airbagvorrichtung für Fahrzeuge, bei der sensorausgelöst durch zumindest einen Gasgenerator zumindest ein Gaskissen aufgeblasen wird, wobei weiters ermittelt wird, ob Hindernisse im vorbestimmten Ausbreitungsbereich des Gaskissens vorhanden sind, und wobei der in das Gaskissen geblasenen Gasvolumenstrom in Abhängigkeit vom Ergebnis dieser Ermittlung eingestellt wird, dadurch gelöst, daß der Gasvolumenstrom in diskreten Abstufungen eingestellt wird. Der Regelaufwand kann im Falle diskreter Abstufungen sehr gering und der apparative Aufwand trotz sehr schneller Reaktionszeit entsprechend gering gehalten werden.

Vorteilhafterweise wird dabei der Durchlaßquerschnitt für den Gasvolumenstrom in diskreten Schritten eingestellt, was die einfachste Möglichkeit zur Erzielung der gewünschten Abstufung des in den Airbag geleiteten Gasvolumenstromes ist.

Um mit wenigen Schritten bzw. Abstufungen einen für die Praxis nützlichen Einstellbereich abdecken zu können, wird gemäß einem weiteren Merkmal der Erfindung der freie Durchlaßquerschnitt für den Gasvolumenstrom in vorzugsweise drei diskreten Schritten von jeweils zwischen 5% und 25%, vorzugsweise 15%, verändert.

Die erforderliche rasche, funktionssichere und einfache Bewirkung der erforderlichen Querschnittsveränderung ist gemäß einem weiteren Erfindungsmerkmal dadurch gewährleistet, daß der Durchlaßquerschnitt durch vorzugsweise pyrotechnisch ausgelöste Elemente verändert wird, zumindest im Falle der Verkleinerung dieses Querschnitts. Selbstverständlich ist vorteilhafterweise auch für die Vergrößerung des Durchströmquerschnittes diese pyrotechnische Auslösung der beweglichen Elemente anwendbar.

Unzulässiger Überdruck im System bei zum Teil abgedeckter Durchströmöffnung für das vom Gasgenerator kommende Gas kann vermieden werden, wenn zumindest ein Teil des vom Gasgenerator kommenden Gasvolumenstroms im Falle eines verkleinerten Durchlaßquerschnitts in die Umgebung des Gaskissens abgeleitet wird.

In der nachfolgenden Beschreibung sollen bevorzugte Ausführungsbeispiele des Erfindungsgedankens unter Bezugnahme auf die beigefügten Zeichnungen einer der Erfindung gemäßen Regeleinrichtung näher erläutert werden.

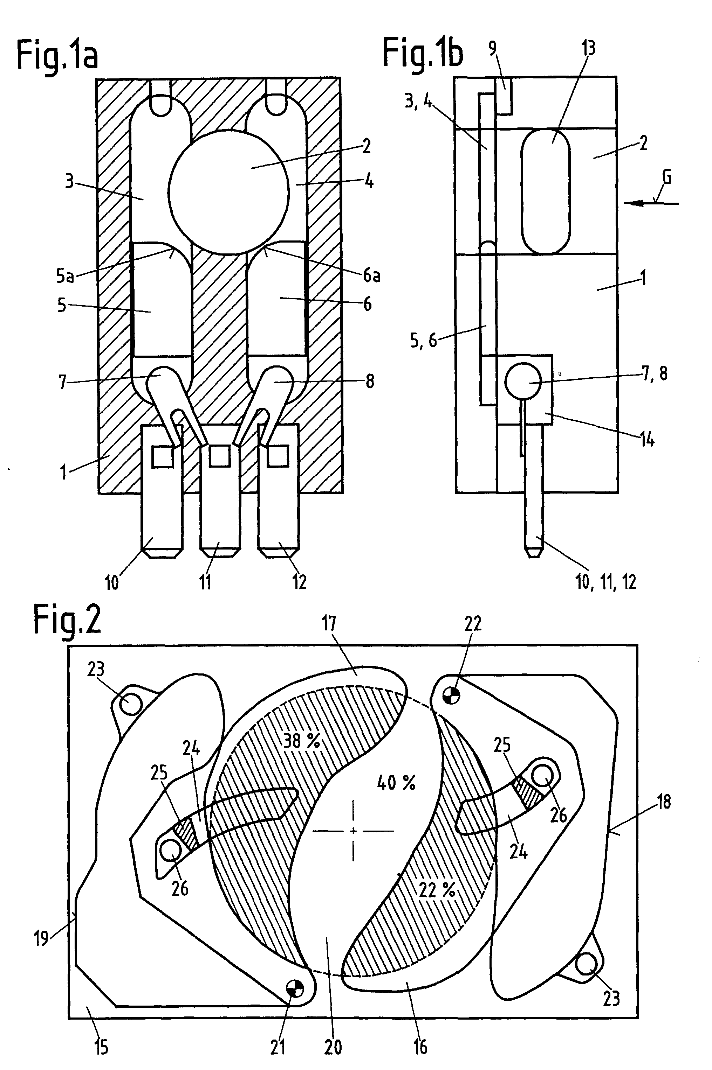

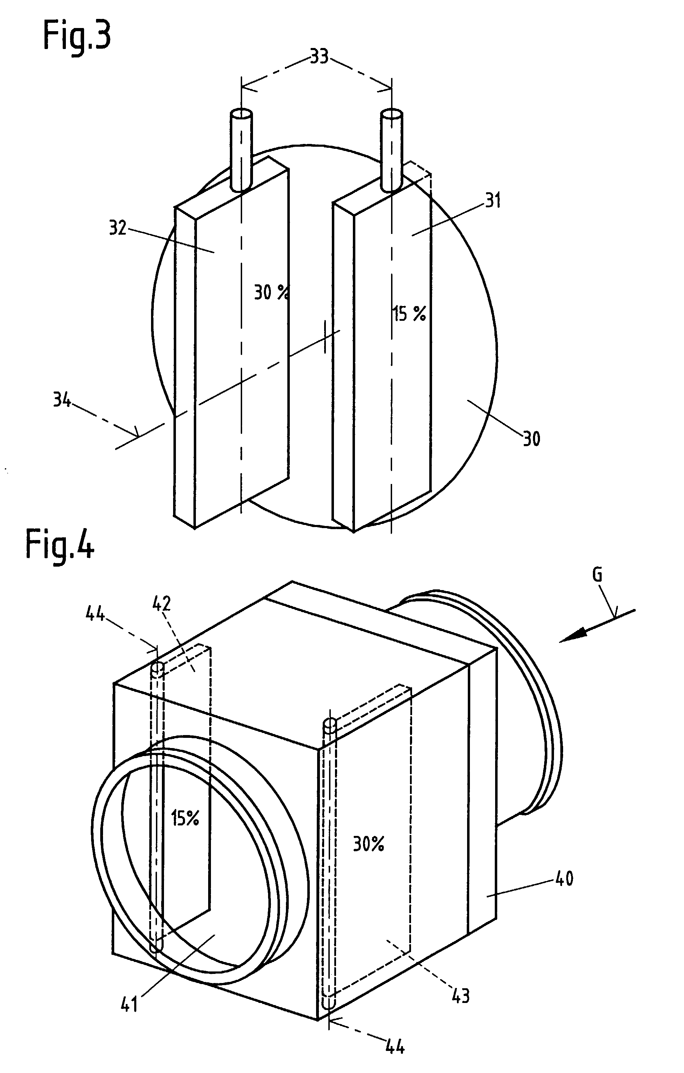

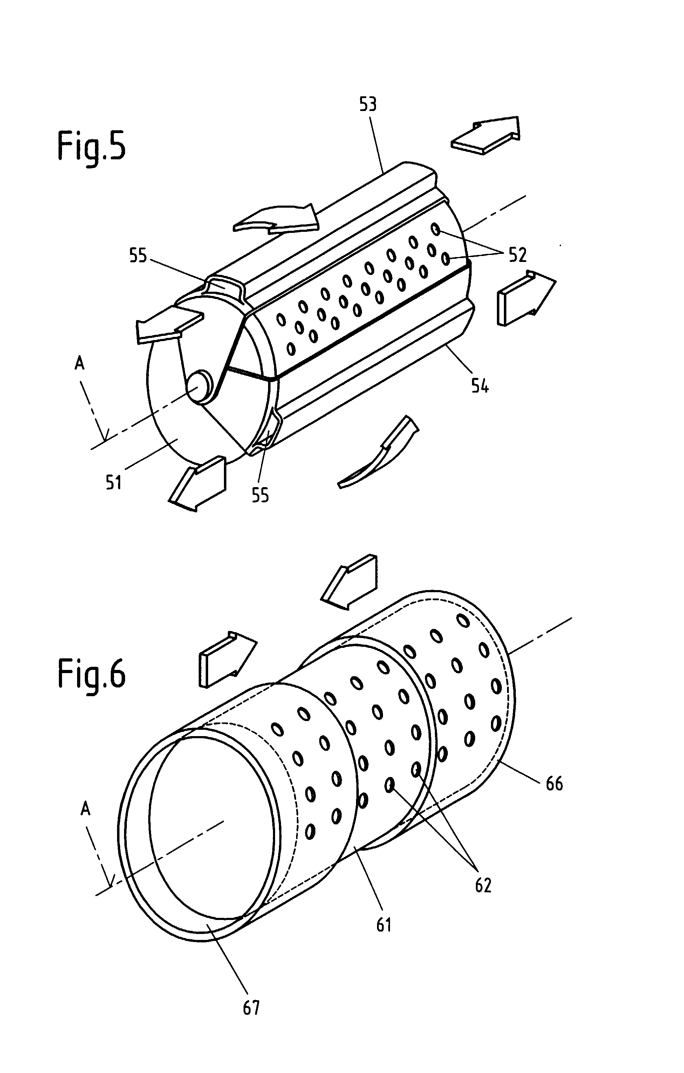

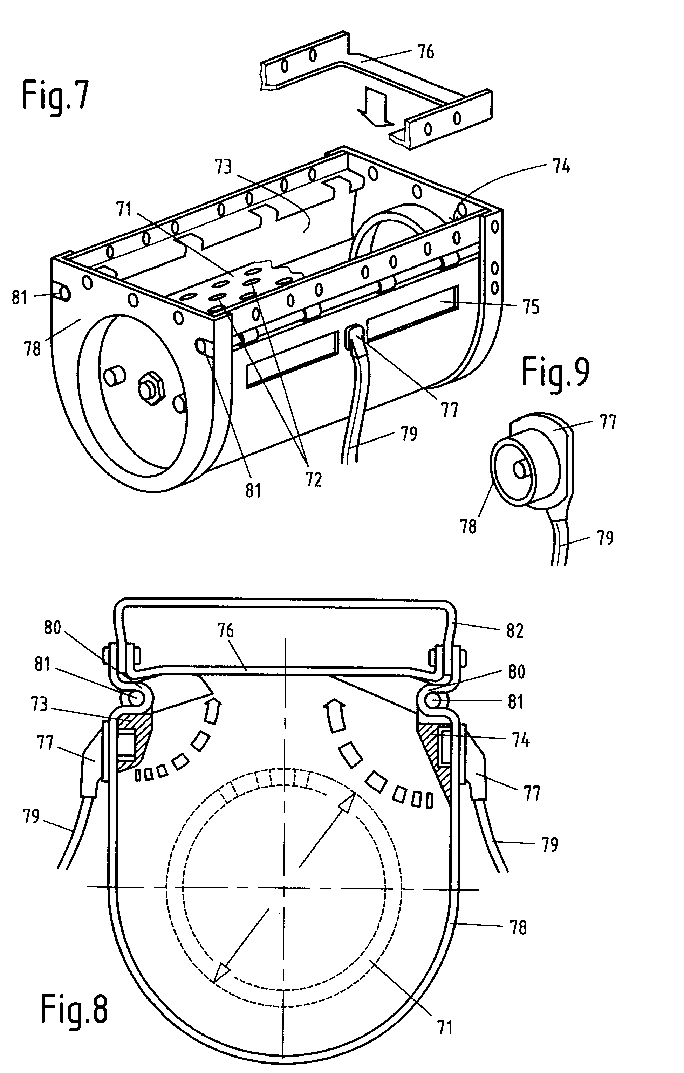

Dabei zeigt die Fig. 1a einen schematischen Schnitt durch eine Ausführungsform der erfindungsgemäßen Regeleinrichtung mit zwei Schiebern, Fig. 1b ist eine schematische Seitenansicht der Einrichtung von Fig. 1a, Fig. 2 ist eine Ansicht einer zweiten Ausführungsform der Regeleinrichtung mit verschwenkbaren Schiebern, Fig. 3 ist eine schematische Ansicht des Funktionsprinzips mit zwei um mittige Achsen verdrehbaren Klappen, Fig. 4 ist eine schematische Ansicht einer weiteren Ausführungsform der erfindungsgemäßen Regeleinrichtung mit zwei um randseitig angeordnete Achsen verschwenkbaren Klappen, Fig. 5 zeigt eine perspektivische Ansicht eines Gasgenerators mit zwei verschwenkbaren Klappen, Fig. 6 eine perspektivische Ansicht eines Gasgenerators mit zwei axial verschiebbaren Blenden, Fig. 7 eine perspektivische Ansicht eines Gehäuses für einen Gasgenerator mit direkt eingebauten, verschwenkbaren Regelklappen, Fig. 8 einen Querschnitt durch die Ausführungsform der Fig. 7 und Fig. 9 ein vergrößerte Darstellung eines Zünderelements.

In Fig. 1 ist mit dem Bezugszeichen 1 das Gehäuse einer erfindungsgemäßen Regeleinrichtung bezeichnet, die zwischen zumindest einem Gasgenerator und dem davon im Ernstfall aufzublasenden Gaskissen, dem eigentlichen Airbag, eingebaut ist. Diese allgemein bekannte Anordnung des gesamten Airbag-System ist hier nicht dargestellt worden. Der Gasstrom kann das Gehäuse 1 durch die Durchströmöffnung 2 passieren. An einer Stelle entlang der Durchströmöffnung 2 sind im Gehäuse 1 zwei Führungskanäle 3 und 4 für je einen Schieber 5 und 6 herausgearbeitet. Die Schieber 5 und 6 sind im wesentlichen ebene Platten mit im wesentlichen rechteckigem Umriß. Die Führungskanäle 3 und 4 können auch gegeneinander in Richtung der Gasströmung versetzt sein. In der Fig. 1a sind die Schieber 5 und 6 in ihrer ersten Endstellung dargestellt, in die Durchströmöffnung 2 vollständig freigegeben ist, d.h. in einer Stellung, die vor der Auslösung des Airbags vorliegt und die auch bei normalem Betrieb des Airbags ohne Hindernissen od. dgl. in seinem Ausbreitungsraum beibehalten wird.

Wenn aber durch eine - nicht dargestellte - Sensoreinrichtung ein derartiges Hindernis, etwa eine in "Out-off"-Position befindliche Person ermittelt wird, erfolgt bei oder unmittelbar nach der Airbag-Auslösung eine Verkleinerung des freien Querschnitts der Durchströmöffnung 2 durch einen oder beide Schieber 5 oder 6, um den in das Gaskissen gelangenden Gasvolumenstrom in diskreter Abstufung zu vermindern. Zu diesem Zweck wird ein oder werden beide Schieber 5 und 6 durch Treibladungen 7 und 8 in den Führungen 3 und 4 in eine zweite Endstellung gebracht, in der sie in die Durchströmöffnung hineinragen und so den freien Querschnitt vermindern. Um eine ungehinderte und schnelle Verschiebung der Schieber zu gewährleisten, sind am Ende der Führungskanäle 3 und 4, welches der zweiten Endstellung entspricht, Entlüftungsöffnungen 9 im Gehäuse 1 vorgesehen, durch welche die von den Schiebern 5 und 6 verdrängte Luft entweichen kann.

Die Treibladungen 7 und 8 zur rasch ansprechenden und schnell und sicher wirkenden pyrotechnischen Auslösung der Schieber 5 und 6 werden durch Anlegen von Steuersignalen an zumindest einen der Anschlüsse 10, 11 und 12 gezündet, wobei durch geeignete Kombination - abhängig von der erforderlichen Verminderung des Gasvolumenstroms, welche ihrerseits von der Lage, Beschaffenheit, Größe, etc. des Hindernisses im Ausbreitungsraum des Gaskissens ist-eine Verkleinerung des Durchströmquerschnittes in diskreten Abstufungen möglich ist. Dabei kann vorteilhafterweise vorgesehen sein, daß durch unterschiedliche Formgebung, Größe oder Anordnung der einzelnen Schieber 5 und 6 jeder Schieber einen unterschiedlichen Querschnitt abdeckt. In einem derartigen Fall ist es mit nur zwei Schiebern möglich, vier unterschiedliche Durchströmquerschnitte zu realisieren. Ein Beispiel dafür ist die Fig. 1a, bei welcher die Durchströmöffnung 2 etwas außermittig zwischen den beiden Führungskanälen 3 und 4 verläuft, sodaß der freie Durchströmquerschnitt etwas weiter auf der Seite des Führungskanals 4 liegt und der zugehörige Schieber 6 in seiner zweiten Endstellung mehr Fläche abdeckt als der Schieber 5 in seiner Endstellung. In Fig. 1 ist die Durchströmöffnung 2 soweit außermittig angeordnet, daß der Schieber 5 15% des ursprünglichen freien Durchströmquerschnitts abdeckt und der Schieber 6 30% dieses Querschnitts. Beide Schieber 5 und 6 gemeinsam können daher 45% des anfänglichen freien Querschnitts abdecken, womit sich vier Einstellstufen der Regeleinrichtung zu 100%, 85%, 70% und 55% der ursprünglichen freien Durchströmöffnung und damit auch des in das Gaskissen gelangenden Gasvolumenstroms ergeben. Selbstverständlich können derartige Abstufungen auch durch unterschiedliche Größe oder Formgebung der Schieber 5 und 6 in ähnlicher Weise erhalten werden.

Die Zündung der einzelnen Schieber 5 und 6 erfolgt beim dargestellten Beispiel durch Anlegen eines Signals an die Anschlüsse 10 und 11 zur Auslösung nur des Schiebers 5, an die Anschlüsse 11 und 12 für nur den Schieber 6 und an alle drei Anschlüsse 10, 11 und 12 für die Auslösung beider Schieber 5 und 6. Die Schieber 5 und 6 selbst sind zur Erzielung eines sanfteren Übergangs bei der Abriegelung des Querschnitts der Durchströmöffnung 2 an ihrem dieser Durchströmöffnung zugewandten Randbereich mit einer abgerundeten Einführ- und Dämpfkante 5a bzw. 6a versehen.

In der schematischen Seitenansicht der Fig. 1b ist weiters eine der vorteilhafterweise vorgesehenen Abströmöffnungen 13 erkennbar, welche vorzugsweise in Richtung des Gasstromes (durch den Pfeil G symbolisiert) vor dem ersten Schieber angeordnet ist. Der bei Querschnittsverminderung der Durchströmöffnung 2 überschüssige Anteil des Gasvolumenstroms kann durch diese zumindest eine Abströmöffnung 13 ins Freie entweichen, sodaß ein unzulässiger Überdruck in der Regeleinrichtung selbst oder auch im gesamten Airbag-System vermieden wird.

In Fig. 1b sind auch die etwas gegenüber den Führungen 3, 4 versetzten Zündkammern 14 zur Aufnahme der Treibladungen 7, 8 erkennbar. Nicht dargestellt sind hingegen die vorteilhafterweise auch zum Zurückbringen der Schieber 5 und 6 in die erste Anfangsstellung vorgesehenen zweiten Treibladungen, die dann gezündet werden, wenn das Hindernis im Ausbreitungraum des Airbags während dessen Aufblasvorgang verschwindet oder in ausreichender Weise nachgibt und der weitere Aufblasvorgang mit voller Wirkung fortgesetzt werden soll. Dafür muß rasch der Durchströmquerschnitt wieder vergrößert werden, wofür ebenfalls die pyrotechnische Auslösung von Vorteil ist.

Eine weitere Ausführungsform einer erfindungsgemäßen Regeleinrichtung ist in Fig. 2 in einer schematische Ansicht aus Richtung des Gasstroms dargestellt. Dabei sind in einem Gehäuse 15 zwei beispielsweise sichelförmige Schieber 16 und 17 in entsprechenden Aufnahmen 18 und 19 um parallel zur Achse der Durchströmöffnung 20 verlaufenden Schwenkachsen 21 und 22 verschwenkbar angeordnet. Die Schwenkachsen 21 und 22 liegen einander vorteilhafterweise bezüglich der Achse der Durchströmöffnung 20 im wesentlichen gegenüber. Aufgrund der im wesentlichen der Form des Randes der Durchströmöffnung 20 geschwungenen Randgestaltung der Schieber 16 und 18 weisen diese eine sehr harte, abrupte Regelcharakteristik auf, die aber andererseits für eine sehr rasche Abdeckung einer möglichst großen Querschnittsfläche nötig ist.

Wieder kann durch unterschiedlich weites Einschwenken der Schieber 16 und 17 und/oder durch unterschiedliche Fläche bzw. unterschiedlich weiten Abstand der Schwenkachsen 21, 22 von der Durchströmöffnung 20 erreicht werden, daß die beiden Schieber 16 und 17 verschieden große Anteile des freien Durchströmquerschnitts abdecken. Bei dem in Fig. 2 dargestellten Beispiel ist mit dem Schieber 16 eine Querschnittsverminderung um 22% möglich, mit dem Schieber 17 eine solche um 38% und mit beiden Schiebern gemeinsam eine Querschnittsverkleinerung um 60%.

Auch in dem Beispiel der Fig. 2 ist die vorzugsweise vorgesehene pyrotechnische Auslösung der Schieber 16 und 17 dargestellt, welche durch Zündkapseln 23 die Schieber sehr rasch und sicher in den freien Durchströmquerschnitt einschwenkt. Zusätzlich ist in Fig. 2 als Beispiel eine vorteilhafte Variante zum raschen Freigeben der Durchströmöffnung 20, d.h. zum Zurückschwenken der Schieber 16 und 17 in ihre erste Endstellung, dargestellt. Dazu sind in den Schiebern 16 und 17 entsprechend dem Schwenkradius und -weg gebogene Ausnehmungen oder Schlitze 24 ausgearbeitet und je eine Nase oder ein Zapfen 25 von der Innenseite des Gehäuses 15 ragt in diese Ausnehmung 24 hinein. Ein Ende der Ausnehmung 24 und der besagte Zapfen 25 bilden in der zweiten, eingeschwenkten Endstellung der Schieber 16 und 17 eine Art Zündkammer, in der wieder Zündkapseln 26 - befestigt am Ende der Ausnehmung 24 oder am Zapfen 25 gehalten - liegen. Bei Zündung der Zündkapseln 26 sorgt der im Raum innerhalb der Ausnehmung 24 und des Zapfens 25 entstehende Druck für die schnelle Rückschwenkung der Schieber 16 und 17.

Ein alternatives Prinzip zur Verkleinerung des Querschnitts der Durchströmöffnung einer Regelvorrichtung für Airbagvorrichtungen zeigt schematisch die Fig. 3. Hier sind wieder im wesentlichen ebene Platten 31, 32 mit vorteilhafterweise einfach herzustellendem, rechteckigem Umriß vorgesehen, die aber um Achsen 33 verschwenkbar sind, die normal auf die Achse 34 der Durchströmöffnung (symbolisch durch den Kreis 30 angedeutet) orientiert sind und im wesentlichen mittig durch die Platten 31, 32 verlaufen. Zur Querschnittsverminderung der Durchströmöffnung 30 und damit zur Verringerung des in das Gaskissen gelangenden Gasvolumenstroms werden die Platten 31, 32 in Art einer Jalousie um die Achsen 33 verschwenkt. Auch hier kann durch unterschiedliche Fläche der Platten 31, 32, durch unterschiedliche Anordnung in Bezug auf die Achse 34 der Durchströmöffnung 30 oder auch durch unterschiedlich weite Schwenkbarkeit um die Achsen 33 für jede der beiden Platten 31, 32 ein unterschiedliches Ausmaß der Abdeckung der Durchströmöffnung eingestellt werden. Obwohl dies nicht dargestellt ist, erfolgt die Auslösung und vorzugsweise auch die Rückstellung der Platten 31, 32 wieder vorzugsweise durch pyrotechnische Auslösung über Zündkapseln od. dgl.

Eine weitere Ausführungsform einer erfindungsgemäße Regeleinrichtung für Airbagvorrichtungen ist schematisch in Fig. 4 dargestellt und umfaßt ein Gehäuse 40 mit einer Durchströmpassage 41 für den durch den Pfeil G symbolisierten Gasstrom vom Gasgenerator zum Gaskissen. Im Gehäuse 40 sind zwei im wesentlichen ebene Platten 42 und 43 als die Durchströmöffnung im Bedarfsfall zum Teil abdeckende Klappen vorgesehen, welche jeweils um eine randseitig gelegene und normal auf die Achse der Durchströmpassage gelegene Achse 44 verschwenkbar sind. In der ersten Endstellung, in der die Klappen 42, 43 noch nicht den freien Durchströmquerschnitt beeinflussen, sind sie entgegengesetzt der Richtung der Gasströmung G ausgerichtet, sodaß nach der vorzugsweise vorgesehenen pyrotechnischen Auslösung die Gasströmung die Schließbewegung der jeweiligen Klappe 42, 43 unterstützt und diese automatisch geschlossen hält. Die auch bei dieser Ausführungsform vorteilhafterweise vorgesehenen Ablaßöffnungen für die überschüssigen Anteile des Gasvolumenstroms sind nicht dargestellt. Falls vorhanden sind diese Ablaßöffnungen aber vorteilhafterweise in Strömungsrichtung des Gases vor den Achsen 44 der Klappen 42, 43 vorgesehen und sind durch diese Klappen 42, 43 abgeckt und somit verschlossen, wenn die Klappen 42, 43 in der die Durchströmpassage freigebenden Stellung sind. Erst nach Verschwenken der Klappen 42, 43 zur Verengung des freien Querschnitts der Durchströmpassage werden diese Ablaßöffnungen freigegeben. Damit ist in diesem Fall sichergestellt, daß im ungeregelten Betrieb der Airbagvorrichtung wirklich das gesamte Gasvolumen in das Gaskissen gelangt und erst bei geregeltem Betrieb die Ablaßöffnungen freigegeben sind.

In Fig. 5 ist mit dem Bezugszeichen 51 der Gasgenerator der Airbagvorrichtung bezeichnet, der mit einer Vielzahl von Gasaustrittsöffnungen 52 versehen ist. Der Gasgenerator 51 weist eine um die Achse A symmetrische Zylinderform auf und die Gasaustrittsöffnungen 52 sind in der Mantelfläche dieses Zylinders ausgearbeitet.

Zur Abregelung des in den Airbag gelangenden Gasstromes sind vorteilhafterweise zwei, um die Achse A verschwenkbare Klappen 53, 54 vorgesehen, deren Bewegung zumindest in die den Gasstrom abregelnde Endstellung vorzugsweise durch pyrotechnische Auslösung mittels einer Sprengkapsel erfolgt. Die Klappen 53, 54 weisen dabei unterschiedliche Größe auf oder sind um unterschiedliche Winkel über die Gasaustrittsöffnungen 52 schwenkbar, so daß sie unterschiedliche Querschnitte abregeln. Im dargestellten Beispiel der Fig. 5 ist die obere Klappe 53 etwas größer als die untere Klappe 54, womit eine Abregelung von ca. 30% des Gasstromes durch allein das Verschwenken der unteren Klappe 54, von ca. 50% durch allein die obere Klappe 53 und von ca. 80% durch Verschwenken beider Klappen 53 und 54 möglich ist.

Beide Klappen 53 und 54 weisen vorteilhafterweise Bypasskanäle 55 auf, durch welche das nicht in den Airbag gelangende Gas aus dem Gasgenerator 51 seitlich entweichen kann. Entweder wird diese Gas durch Austrittsöffnungen im Gehäuse um den Gasgenerator 51 ins Freie abgelassen oder es gelangt mit zeitlicher Verzögerung doch noch in den Airbag, wobei aber durch diese Verzögerung auch die volle Entfaltung des Airbags hinausgezögert wird.

Eine weitere Ausführungsform der Erfindung mit im wesentlichen zylindrischem Gaserzeuger 61 ist in Fig. 6 dargestellt. Hier werden im Bedarfsfall die wieder in der Mantelfläche des Zylinders 61 ausgearbeiteten Gasaustrittsöffnungen 62 durch vorzugsweise zwei koaxiale, entlang der Zylinderachse A verschiebbare Blenden 66 und 67 abgedeckt. Wieder können die Blenden 66, 67 entweder unterschiedlich groß sein oder unterschiedlich weit über den Gaserzeuger 61 geschoben werden, um unterschiedliche Regelquerschnitte zu erzielen.

In der weiteren Ausführungsform der Fig. 7 und 8 ist mit 78 das Gehäuse einer erfindungsgemäßen Airbagvorrichtung bezeichnet, in das ein wieder vorzugsweise zylinderförmiger Gaserzeuger 71 eingebaut ist. Das davon im Ernstfall aufzublasenden Gaskissen, der eigentliche Airbag, ist in Fig. 7 der Klarheit halber nicht dargestellt, wäre auf der Oberseite des Gehäuses 78 angebaut.

Wenn - wie bereits weiter oben erläutert - durch eine nicht dargestellte Sensoreinrichtung ein Hindernis, etwa eine in "Out-off"-Position befindliche Person, im Ausbreitungsbereich des Gaskissens ermittelt wird, erfolgt bei oder unmittelbar nach der Airbag-Auslösung eine Verkleinerung des freien Querschnitts der Durchströmöffnung zum Gaskissen, hier durch den rechteckigen oberen Rand des Gehäuses 78 gegeben, durch einen oder beide der Klappen 73 und 74 (letztere in Fig. 7 nicht sichtbar), um den in das Gaskissen gelangenden Gasvolumenstrom in diskreter Abstufung zu vermindern.

Diese Klappen 73 und 74 sind zwei im wesentlichen ebene Platten, welche jeweils um eine randseitig gelegene und normal auf die Achse der Durchströmpassage - im vorliegenden Fall parallel zur Achse A des Gaserzeugers 71-gelegene Achse verschwenkbar sind. Die Klappen 73 und 74 sind vorzugsweise direkt am Gehäuse 78 schwenkbar befestigt. In der ersten Endstellung, in der sie noch nicht den freien Durchströmquerschnitt beeinflussen, sind sie entgegengesetzt der Richtung der Gasströmung G ausgerichtet, sodaß nach der vorzugsweise vorgesehenen pyrotechnischen Auslösung die Gasströmung die Schließbewegung der jeweiligen Klappe 73 und/oder 74 unterstützt und diese automatisch geschlossen hält. Die auch bei dieser Ausführungsform vorteilhafterweise vorgesehenen Ablaßöffnungen für die überschüssigen Anteile des Gasvolumenstroms sind mit 75 bezeichnet. Diese Öffnungen 75 sind vorteilhafterweise durch die Klappen 73, 74 abgeckt und somit verschlossen, wenn diese Klappen 73, 74 in der die Durchströmpassage freigebenden Stellung sind. Erst nach Verschwenken der Klappen 73, 74 zur Verengung des freien Querschnitts der Durchströmpassage werden diese Ablaßöffnungen 75 freigegeben, so daß im ungeregelten Betrieb der Airbagvorrichtung wirklich das gesamte Gasvolumen in das Gaskissen gelangt und bei geregeltem Betrieb kein unzulässiger Überdruck entstehen kann.

Die Endstellung der beiden Klappen 73 und 74 wird durch ein Fängerblech 76 definiert, das verformbar ist und dadurch die Stoßenergie beim Auftreffen der Klappen 73 und 74 aufnimmt und vernichtet. Dadurch werden in vorteilhafter Weise Beschädigungen der Klappen 73, 74 selbst als auch des Gehäuses 78 vermieden, die zu Beeinträchtigungen der ordnungsgemäßen Funktion der Airbagvorrichtung führen könnten.

Die Auslösung der Klappen 73, 74 erfolgt durch Treibladungen, die in vorzugsweise mittels eines Rastmechanismus im Gehäuse 78 fixierbaren Elementen 77 (siehe Fig. 9) sitzen. Zu diesen vorzugsweise aus Kunststoff angefertigten und mit zylindrischen Verlängerungen 78 zur langen Aufrechterhaltung des Drucks auf die Klappen 73 bzw. 74 ausgeführten Elementen 77 führen auch die elektrischen Leitungen 79 zur Auslösung der Treibladungen.

Auch bei der Ausführungsform der Fig. 7 kann vorteilhafterweise vorgesehen sein, daß durch unterschiedliche Formgebung, Größe oder Anordnung der einzelnen Klappen 73, 74 unterschiedliche Querschnitte abgedeckt werden, was besser aus Fig. 8 zu ersehen ist. Vorteilhafterweise ist dazu auch der Gaserzeuger 71 etwas außermittig im Gehäuse 78 angeordnet, um der unterschiedlichen Breite der Klappen 73 und 74 Rechnung zu tragen. Die Klappen 73, 74 sind vorteilhafterweise mit seitlichen Abschrägungen versehen, die die Aerodynamik fördern und das Andrücken der Klappen an das Fängerblech 76 durch die Gasströmung verstärken.

Im Querschnitt der Fig. 8 ist auch die Sicke 80 in der Wand des Gehäuses 78 zu erkennen, durch welche die Achse 81 für die Klappen 73, 74 verläuft und die gleichzeitig die Stabilität des Gehäuses 78 erhöht.

Schließlich ist in Fig. 8 auch noch das Gaskissen 82 eingezeichnet, das oberhalb des Fängerbleches 76 direkt auf das Gehäuse 78 aufgesetzt und unter einer absprengbaren Abdeckung gesichert ist, die vorzugsweise gleich dem Fängerblech 76 mit dem Gehäuse 78 vorzugsweise vernietet ist.

## Patentansprüche

1. Airbagvorrichtung für ein Fahrzeug, mit zumindest je einem Gasgenerator, einem durch diesen Gasgenerator aufblasbaren Gaskissen und einer mit dem Gasgenerator zu dessen Auslösung verbundenen ersten Sensoreinrichtung, wobei zwischen dem oder jedem Gasgenerator und dem oder jedem davon aufblasbaren Gaskissen eine Regeleinrichtung für den Gasvolumenstrom eingebaut ist, welche mit einer zweiten Sensoreinrichtung zur Feststellung von Hindernissen im vorbestimmten Ausbreitungsbereich des Gaskissens in Verbindung steht, welche Sensoreinrichtung zur Abgabe dem Hindernis entsprechenden Stellsignalen an die Regeleinrichtung ausgebildet ist, **dadurch gekennzeichnet**, daß die Regeleinrichtung (1, 15, 40) zur Einstellung von zumindest zwei diskreten, unterschiedlichen Durchlaßquerschnitten ausgelegt ist.

2. Airbagvorrichtung nach Anspruch 1, dadurch gekennzeichnet, daß die Regeleinrichtung (1, 15, 40) zumindest ein den freien Durchlaßquerschnitt zumindest einer Durchströmöffnung (2, 20, 30, 41) veränderndes, bewegbares Element (5, 6, 16, 17, 31, 32, 42, 43, 53, 54, 66, 67, 73, 74) aufweist.

3. Airbagvorrichtung nach Anspruch 2, dadurch gekennzeichnet, daß zumindest die Bewegung des Elementes (5, 6, 16, 17, 31, 32, 42, 43, 53, 54, 66, 67, 73, 74) zur Querschnittsverkleinerung der Durchströmöffnung (2, 20, 30, 41) der Regeleinrichtung durch pyrotechnische Auslösung erfolgt, vorzugsweise auch die Bewegung des Elementes zur Querschnittsvergrößerung der Durchströmöffnung der Regeleinrichtung durch pyrotechnische Auslösung erfolgt.

4. Airbagvorrichtung nach Anspruch 2 oder 3, dadurch gekennzeichnet, daß das Element als normal auf die Achse der Durchströmöffnung (2) bewegbarer, im wesentlichen ebener Schieber (5, 6) ausgeführt ist (Fig. 1a).

5. Airbagvorrichtung nach Anspruch 2 oder 3, dadurch gekennzeichnet, daß das Element als um eine Achse (21, 22) verschwenkbare, im wesentlichen ebene Platte (16, 17) ausgeführt ist, wobei die Achse in einem Randbereich der Platte vorgesehen, normal auf die Platte und parallel zur Achse der Durchströmöffnung (20) orientiert ist (Fig. 2).

6. Airbagvorrichtung nach Anspruch 2 oder 3, dadurch gekennzeichnet, daß das Element als um eine Achse (44) verschwenkbare, im wesentlichen ebene Platte (42, 43) ausgeführt ist, wobei die Achse (44) normal auf die Achse der Durchströmöffnung (41) orientiert ist, durch einen Randbereich parallel zur Platte verläuft und vorzugsweise außerhalb der maximalen freien Durchströmöffnung angeordnet ist (Fig. 4).

7. Airbagvorrichtung nach Anspruch 6, dadurch gekennzeichnet, daß die Platte (73, 74) direkt am den Gaserzeuger (71) umgebenden Gehäuse (78) angebracht ist (Fig.5).

8. Airbagvorrichtung nach Anspruch 7, dadurch gekennzeichnet, daß die den Querschnitt verengende Endstellung der Platte (73, 74) durch ein direkt am Gehäuse (78) befestigtes Fängerelement (76) definiert ist, welches vorzugsweise zur Aufpralldämpfung verformbar ausgeführt ist.

9. Airbagvorrichtung nach Anspruch 2 oder 3, dadurch gekennzeichnet, daß das Element als um eine Achse (33) verschwenkbare, im wesentlichen ebene Platte (31, 32) ausgeführt ist, wobei die Achse (33) normal auf die Achse (34) der Durchströmöffnung (30) orientiert ist, durch einen im wesentlichen mittigen Bereich parallel zur Platte verläuft und vorzugsweise durch den Durchströmquerschnitt verläuft.

10. Airbagvorrichtung nach einem der Ansprüche 2 oder 3, dadurch gekennzeichnet, daß das bewegbare Element als den Gaserzeuger (51, 61) in einer Endstellung zumindest teilweise abdeckende Blende (53, 54; 66, 67) ausgeführt ist (Fig. 5, 6).

11. Airbagvorrichtung nach Anspruch 10 mit einem eine bevorzugte Achse aufweisenden, vorzugsweise axialsymmetrischen Gaserzeuger (61), dadurch gekennzeichnet, daß die Blende (66, 67) entlang der bevorzugten Achse (A), vorzugsweise der Symmetrieachse, des Gaserzeugers (61) bewegbar ist (Fig. 6).

12. Airbagvorrichtung nach Anspruch 11, dadurch gekennzeichnet, daß zwei Blenden (66, 67) auf einander entgegengesetzten Seiten des Gaserzeugers (61) vorgesehen sind.

13. Airbagvorrichtung nach Anspruch 10 mit einem eine bevorzugte Achse aufweisenden, vorzugsweise axialsymmetrischen Gaserzeuger (51), dadurch gekennzeichnet, daß die Blende (53, 54) um die bevorzugte Achse (A), vorzugsweise die Symmetrieachse, des Gaserzeugers (51) verschwenkbar ist (Fig. 5).

14. Airbagvorrichtung nach Anspruch 13, dadurch gekennzeichnet, daß die Blende (53, 54) vorzugsweise axial orientierte Bypasskanäle (55) für das aus dem Gaserzeuger (1) austretende Gas aufweist.

15. Airbagvorrichtung nach Anspruch 13 oder 14, dadurch gekennzeichnet, daß zwei Blenden (53, 54) auf einander entgegengesetzten Seiten des Gaserzeugers (51) vorgesehen sind.

16. Airbagvorrichtung nach einem der Ansprüche 2 bis 15, dadurch gekennzeichnet, daß zumindest zwei Elemente (5 und 6, 16 und 17, 31 und 32, 42 und 43, 53 und 54, 66 und 67, 73 und 74) vorhanden sind, die in zumindest einer Stellung, vorzugsweise einer Endstellung, vorzugsweise unterschiedliche Querschnittsflächenanteile des Durchströmquerschnitts abdecken.

17. Airbagvorrichtung nach Anspruch 16, dadurch gekennzeichnet, daß zwei Elemente (5 und 6, 16 und 17, 31 und 32, 42 und 43, 53 und 54, 66 und 67, 73 und 74) vorgesehen sind, von welchen eines zwischen 5% und 25% der freien Querschnittsfläche, vorzugsweise 15%, und das zweite zwischen 15% und 45% der freien Querschnittsfläche, vorzugsweise 30%, abdeckt.

18. Airbagvorrichtung nach einem der vorhergehenden Ansprüche, dadurch gekennzeichnet, daß die Regeleinrichtung zumindest eine Ablaßöffnung (13, 75) für zumindest einen Teil des vom Gasgenerator kommenden Gasvolumenstroms aufweist.

19. Airbagvorrichtung nach Anspruch 18, dadurch gekennzeichnet, daß die Ablaßöffnung (13, 75) in Abhängigkeit von der Stellung des den freien Durchlaßquerschnitt zumindest einer Durchströmöffnung verändernden, bewegbaren Element (5 und 6, 16 und 17, 31 und 32, 42 und 43, 53 und 54, 66 und 67, 73 und 74) und/oder der zweiten Sensoreinrichtung zur Feststellung von Hindernissen im vorbestimmten Ausbreitungsbereich des Gaskissens öffenbar ist.

20. Airbagvorrichtung nach Anspruch 18, dadurch gekennzeichnet, daß die Ablaßöffnung (13, 75) immer durchlässig ist und deren Achse mit der Achse der Durchlaßöffnung (2) vorzugsweise einen stumpfen Winkel einschließt, insbesondere normal darauf orientiert ist.

21. Verfahren zum Betreiben einer Airbagvorrichtung für Fahrzeuge, bei der sensorausgelöst durch zumindest einen Gasgenerator zumindest ein Gaskissen aufgeblasen wird, wobei weiters ermittelt wird, ob Hindernisse im vorbestimmten Ausbreitungsbereich des Gaskissens vorhanden sind, und wobei der in das Gaskissen geblasenen Gasvolumenstrom in Abhängigkeit vom Ergebnis dieser Ermittlung eingestellt wird, dadurch gekennzeichnet, daß der Gasvolumenstrom in diskreten Abstufungen eingestellt wird.

22. Verfahren nach Anspruch 21, dadurch gekennzeichnet, daß der Durchlaßquerschnitt für den Gasvolumenstrom in diskreten Schritten eingestellt wird.

23. Verfahren nach Anspruch 21, dadurch gekennzeichnet, daß der freie Durchlaßquerschnitt für den Gasvolumenstrom in vorzugsweise drei diskreten Schritten von zwischen 5% und 25%, vorzugsweise 15%, verändert wird.

24. Verfahren nach Anspruch 22 oder 23, dadurch gekennzeichnet, daß der Durchlaßquerschnitt durch vorzugsweise pyrotechnisch ausgelöste Elemente verändert wird, zumindest im Falle der Verkleinerung dieses Querschnitts.

25. Verfahren nach einem der Ansprüche 21 bis 24, dadurch gekennzeichnet, daß zumindest ein Teil des vom Gasgenerator kommenden Gasvolumenstroms im Falle eines verkleinerten Durchlaßquerschnitts in die Umgebung des Gaskissens abgeleitet wird.
